Europäisches Patentamt

European Patent Office

Office européen des brevets

(11) Publication number: **0 084 441**
**A2**

## (12) EUROPEAN PATENT APPLICATION

(21) Application number: 83300178.7

(22) Date of filing: 13.01.83

(51) Int. Cl.³: **G 06 F 13/00**

(30) Priority: 19.01.82 GB 8201353

(43) Date of publication of application:
27.07.83 Bulletin 83/30

(84) Designated Contracting States:
AT DE FR GB NL SE

(71) Applicant: TABS LIMITED
Sopers House Chantry Way
Andover Hampshire SP10 1PE(GB)

(72) Inventor: Rogers, David Nigel
The Lodge 118 Ringwood Road
Verwood Wimborne Dorset(GB)

(72) Inventor: Poole, Terence Eric Cyril
The Old Rectory
Blackford Yeovil Somerset(GB)

(74) Representative: Pritchard, Colin Hubert et al,
Mathys & Squire 10 Fleet Street
London EC4Y 1AY(GB)

(54) Method and apparatus for the protection of proprietary computer software.

(57) Apparatus for protecting proprietary computer software against unauthorised use comprises a store (11) for selected data, means (10) for comparing data successively communicated by a program running on a computer (1) with data from the storage means, means such as an indelible memory (15) associated with a microprocessor (14) for storing identifying data, and transmitting means (14) for sending stored identifying data to the computer. When a match is detected by the comparator, the identifying data are sent to the computer, which requires this data for continued normal running. A copy of the software cannot run on a computer without associated protection apparatus and unauthorised copies will therefore be unusable unless the protection apparatus can be obtained. For a great degree of protection, a sequence of matches and identifying data messages may be required to allow continued normal running of a program.

FIG 1

Croydon Printing Company Ltd.

- 1 -

Method and
Apparatus for the Protection of Proprietary Computer Software

The present invention relates to apparatus for the protection of proprietary computer software, and in particular for protecting such software against unauthorised use.

The large amount of time and skill which is frequently involved in the writing of computer programs means that software is very often expensive. When a hardware and software package is sold to users of computer systems, a significant part of the cost will be attributable to the software. Currently, hardware costs are falling as the number of users increases and mass production techniques can be used. For software, reproduction costs are low, but initial development costs remain high. The market has become very competitive and the unscrupulous, instead of commissioning their own programs, may be tempted to take the much cheaper alternative of copying without authority the programs of others. For sophisticated computer systems which are tailored to the particular user's requirements it is relatively straightforward to monitor the system and avoid unauthorised adoption by others of the associated software. For standard systems, on the other hand, software products are frequently shipped in volume, often through distributors, to a large buying public, giving the opportunity for copying.

One proposal for protecting software is for the software package to be sold with a hardware key. The key could, for example, be physically connected to the computer data bus. With such an arrangement, the software would be written to read a code, such as the serial number of the particular software package, embedded in the hardware. Provided this code matched counterparts held at suitable places in the software, the running of the program would be allowed to continue, but if there was no match, the program would be stopped from running. A person who copied the program and attempted to use it with a different hardware key or with no key at all would not be able to do so.

The above proposal has two disadvantages: one is that the key is very simple and can quite easily be copied and the other is that the key is specific to each type of hardware. Software is often written in a form which allows it to be easily transferred from one basic hardware system to another. This enables the user to upgrade his hardware without having to invest in new software at the same time and also enables the supplier to offer his software for use on the latest equipment at little extra expense to him. The simple key proposed would not therefore be of much value.

The present invention provides apparatus for protecting software which is adaptable for use on all kinds of computer hardware conforming to certain standards and which cannot easily be copied.

Accordingly, the invention provides apparatus capable of protecting proprietary computer software against unauthorised use, comprising storage means for storing selected data, comparison means for comparing data successively communicated by a program running on a computer with data from the storage means, means for storing identifying data and transmitting means for sending stored identifying data to the computer, whereby on detection of a match in use, the transmitting means send said identifying data to the computer, said data being require for continued normal running of a proprietary program.

If the program were to be run on a computer without associated protection apparatus, the program would cease running normally as it would not receive the required identifying data.

The apparatus may be provided with communications means which enable data to be transferred to and from a computer associated with the apparatus. The apparatus may also be adapted for communication with a peripheral device. The communications means can consist of simple and standard communications hardware, making the apparatus very versatile and usable with many kinds of computer hardware.

In one form, the apparatus comprises blocking means to prevent transfer of data to the peripheral device after detection of a match and until after said identifying data has been transmitted by said transmitting means. It may also include switching means for preventing actuation of the blocking means, to allow the running of a non-proprietary program without interruption by the blocking means.

In a preferred form of the apparatus which provides particularly effective protection, said selected data comprises a code of data bits and said identifying data comprises a message of data bits and a plurality of the data codes and data messages are stored in said respective storage means for the data codes to be successively compared and said data messages to be successively transmitted, whereby a proprietary program on an associated computer will cease running normally unless a predetermined sequence of identifying data messages is received by the program from the apparatus. The apparatus can be programmed to alter in a predeteremined manner the selected group of data bits which are to be matched and to send a sequence of messages to the computer, these being required by the computer in order to allow continued normal running of the program.

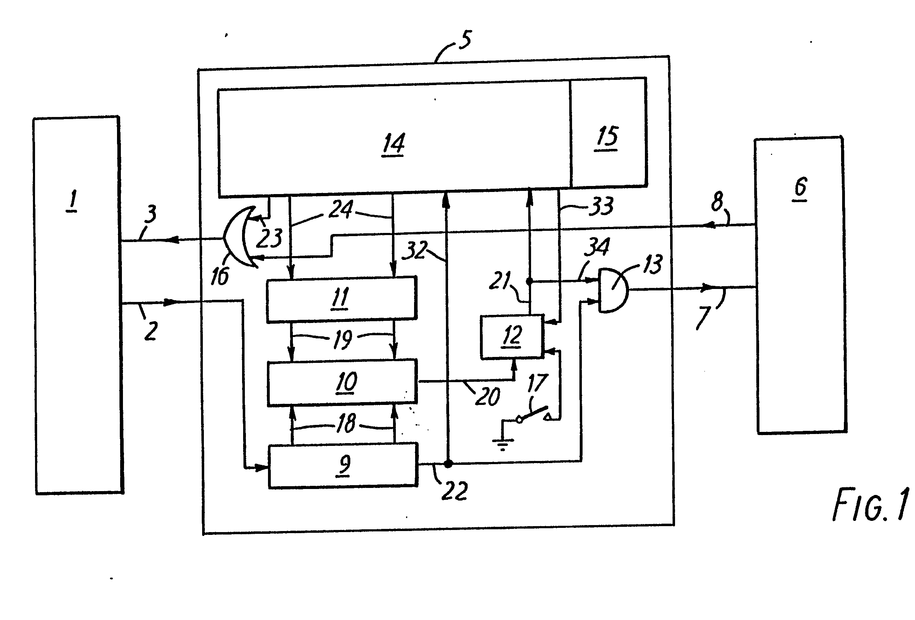

The invention will now be described, by way of example, with reference to the accompanying drawing which is designated Figure 1.

The Figure shows, in block schematic form, particular protection apparatus constructed in accordance with the invention, in combination with other apparatus.

Referring to the Figure, a programmed computer 1 is connected to a peripheral device 6, which could be for example a printer, a visual display unit, or another computer. Connected between the computer 1 and peripheral device 6 is protection apparatus 5 according to the invention. Communications means 2, 3 and 7, 8 are standard RS-223-C interfaces for transmission of data to and from the computer and peripheral device.

Protection apparatus 5 comprises a shift register 9 which receives groups of data bits from the computer 1 via line 2. A further register 11 stores data in the form of an eight digit code number for example the particular code of the proprietor of the software, and is under the control of a microprocessor 14 which can, via lines 24, alter the data stored in the register 11 if required. Registers 9 and 11 are connected respectively via lines 18 and 19 to a comparator 10. The output of the comparator is connected via line 20 to a bistable 12 which is also controlled by a switch 17 and a line 33 from microprocessor 14. The output of the bistable 12 is connected via line 21 to the microprocessor 14 and line 34 to an AND-gate 13. The output of shift register 9 is directly connected with the AND-gate 13 via line 22 and also has a line 32 to the microprocessor 14. Data from gate 13 passes via line 7 to peripheral device 6 and data from device 6 may be transmitted to the computer 1 via line 8, OR-gate 16 and line 3. The microprocessor 14 is also connected to OR-gate 16 via line 23.

It will be apparent from the foregoing that microprocessor 14 receives data from and supplies data to various components of the protection apparatus 5. The microprocessor is associated with a non-volatile memory 15 which stores the multi-digit serial number of the software, or other identifying data such as a serialised message of coded characters. A program running on the computer requires transmission of the serial number (or identifying data) from the protection apparatus 5 in order to continue running.

- 6 -

The operation of the apparatus 5 is as follows. A program running on computer 1 sends data via line 2 as a sequence of bits to the shift register 9, where the bits are held a byte (8 bits) at a time for the purposes of comparison with the 8 digit code in register 11. Bits are successively passed to register 9 for comparison and, in the absence of a match with the code in register 11, the data passes via line 22 to AND-gate 13. As long as there is no match between the contents of registers 9 and 11, bistable 12 continues to enable AND-gate 13 and the data passes via line 7 to the peripheral device 6. All data passing via line 22 to the peripheral device 6 can be read by microprocessor 14 which is connected to the output of register 9 via line 32.

The bistable 12 and AND-gate 13 function as a temporary blocking means. If the comparator 10 detects a match, the state of bistable 12 is changed and the AND-gate 13 is disabled. This prevents peripheral 6, which may for example be a VDU or a printer, from displaying or printing data which is part of the checking operation and in unrelated to the purpose of the program. Bistable 12 is connected via line 21 to the microprocessor 14 and the bistable 12 prompts the microprocessor to transmit the serial number stored in memory 15 to the computer via line 23, OR-gate 16 and line 3.

The proprietary program running on the computer is so written as to require transmission of the serial number to keep on running normally, that is to say to continue to run and perform its intended tasks instead of carrying out checks. The program receives and checks the serial number from apparatus 5. If the number is incorrect, the program will cease running. In an alternative form, the program may be compiled to send appropriate messages to the peripheral device 6 if the correct serial number is not received, telling the user to check that the correct apparatus and program are being used in conjunction, or warning that the program in use is an unauthorised copy.

If the serial number is found to be correct, the program is allowed to continue running normally and data passes to the apparatus via line 2, and register 9. The data is read by the microprocessor 14 via line 32, the microprocessor causes a signal to be sent to bistable 12 via line 33 which enables AND-gate 13, previously disabled on detection of a match, allowing data to pass via line 7 to peripheral device 6 which can resume its display or printing of relevant data.

If it is desired to run a non-proprietary program on computer 1, the apparatus 5 need not be disconnected as the program is permitted to run and is unaffected by the apparatus. Data from the computer 1 passes via line 2 to register 9. It is unlikely that a match will be detected by comparator 10 but to prevent a spurious match disabling gate 13, switch 17 may be closed to cause bistable 12 to keep the gate 13 enabled, allowing data to pass directly from the register 9 to gate 13 via line 22 and thence to peripheral device 6 via line 7. Data from the peripheral device may pass via line 8 through the protection apparatus, emerging from gate 16 on line 3 to reach computer 1.

A producer of proprietary computer software can protect the software from unauthorised copying by selling the software together with apparatus according to the invention, suitably a piece of hardware in a "black box". The program is compiled so as to require specific data for continued normal running and the apparatus of the present invention provides that data. In the embodiment described above, the program is written to include the code required by register 11 of apparatus 5 to provide a match, and the match causes microprocessor 14 to send the serial number of the program to the computer 1, this being the data required to cause the program to continue running. An unauthorised person who has copied the program but has not been supplied with the apparatus 5 cannot run the program past a certain point because the serial number will not be transmitted, thus causing the running to cease. A manufacturer need not go to considerable trouble and expense, as has been necessary in the past, to stop his programs from falling into the hands of the unscrupulous because copies of proprietary programs are unusable without associated protection apparatus according to the invention.

The apparatus described and illustrated is one example of an embodiment of the invention, which has been shown for convenience as comprising a number of hardware components. It will be appreciated that these could be replaced by fixed firmware in a dedicated microcomputer to perform similar functions. The code or

0084441

other data store which in the embodiment described above was register 11 could comprise a PROM. The incoming data from the computer could be stored for comparison purposes in a memory register and the comparison carried out by the firmware through a sequence of logical operations under the instructions of the microcomputer.

The apparatus of Figure 1 is a particularly simple example, and more sophisticated forms could provide a greater degree of software protection. For example, microprocessor 14, which can control register 11 via lines 24, may be programmed to modify the contents of the register once or several times after comparator 10 has detected a first match, the program running on the computer being programmed to supply the appropriate codes via line 2. Memory 15 may store a sequence of serial numbers or messages to be released in turn, after detection of successive matches by comparator 10, to the program which requires these numbers for the performance of a sequence of tasks or checks, necessary to allow continued running of the program and for the sending of a message via line 2 for the enabling of gate 13.

Gate 13, or an equivalent device, is optional and may be included if a peripheral device is running in series with the protection apparatus. If a peripheral device is running on a different line or there is no such device, lines 2 and 3 will communicate solely with apparatus 5, and gate 13, which serves to prevent data present purely for the purpose of checking from reaching the peripheral device, would be redundant.

The versatility of the apparatus may be increased by carrying out the initial comparison on an arbitrary time base with repeated sampling so as to determine the baud rate of the data prior to checking the pattern of bits for a match. Once a match has been detected the apparatus may allow all data unconnected with the checking operation to be transmitted to a peripheral device running on the computer.

Where the apparatus is connected in an on-line mode on a communications port on a computer, it may act as a terminal concentrator for more than one output channel. The apparatus would then be provided with several interfaces such as interface 7, 8 with associated logic in the microprocessor. The apparatus is versatile because it is connected via a standard· interface to the particular user's hardware and can still be used if the hardware is updated, in association with suitably modified software.

CLAIMS:

1.      Apparatus capable of protecting proprietary computer software against unauthorised use, comprising storage means for storing selected data, comparison means for comparing data successively communicated by a program running on a computer with data from the storage means, means for storing identifying data and transmitting means for sending stored identifying data to the computer, whereby on detection of a match in use, the transmitting means send said identifying data to the computer, said data being required for continued normal running of a proprietary program.

2.      Apparatus as claimed in claim 1, wherein said selected data comprises a code of data bits and said identifying data comprises a message of data bits and a plurality of the data codes and data messages are stored in said respective storage means for the data codes to be successively compared and said data messages to be successively transmitted, whereby a proprietary program on an associated computer will cease running normally unless a predetermined sequence of identifying data messages is received by the program from the apparatus.

3.      Apparatus as claimed  in claim 1 or claim 2, including a combined storage means for storing said selected data and said identifying data.

4.      Apparatus as claimed in any preceding claim, including communications means for the transfer of data to and from a computer associated with the apparatus.

5. Apparatus as claimed in any preceding claim wherein the apparatus is adapted for communication with a peripheral device.

6. Apparatus as claimed in claim 5, comprising blocking means to prevent transfer of data to the peripheral device after detection of a match and until after said identifying data has been transmitted by said transmitting means.

7. Apparatus as claimed in claim 6, including switching means for preventing actuation of the blocking means, to allow the running of a non-proprietary program without interruption by the blocking means.

8. Apparatus as claimed in any preceding claim comprising a programmed microcomputer, wherein the storage means for the selected data and the identifying data comprise programmable read only memories and the comparison means is adapted to operate under the instructions of the programmed microcomputer by carrying out a sequence of logical operations to detect a match.

9. A method for protecting proprietary computer software against unauthorised use, comprising storing selected data and identifying data in protection apparatus associated with a programmed computer, successively communicating data from the computer to the apparatus, comparing said communicated data with said selected data and, on detection of a match, transmitting said identifying data to the computer, the identifying data being required by a proprietary program for continued normal running.

0084441

FIG.1